# EUROPÄISCHE PATENTANMELDUNG

(11) **EP 2 228 894 A1**
(43) Veröffentlichungstag der Anmeldung: **15.09.2010**
(21) Anmeldenummer: 09154785.1
(22) Anmeldetag: 10.03.2009
(51) Int. Cl.: H02M 7/217

(54) **Gleichrichter mit mehrstufiger Wandlerschaltung**

(71) Anmelder: ABB Schweiz AG, 5400 Baden (CH)
(72) Erfinder: Herold, Simon, CH-8910 Affoltern am Albis (CH); Huggenberger, Thomas, CH-5415 Nussbaumen (CH); Suh, Yongsug, Jeonju, 560-822 (KR); Steimer, Peter, CH-5420 Ehrendingen (CH)
(74) Vertreter: ABB Patent Attorneys

(57) **Zusammenfassung**

Die Erfindung betrifft einen Gleichrichter (1). Der Gleichrichter (1) umfasst eine Gleichrichterschaltung (4) zum Bereitstellen einer gleichgerichteten Zwischenspannung aus mehreren Phasenspannungen eines Mehrphasensystems, und eine Gleichspannungswandlerschaltung (7) zum Generieren einer vorgegebenen Ausgangsspannung (U_{A}) aus der Zwischenspannung, wobei die Gleichspannungswandlerschaltung (7) ausgebildet ist, um abhängig von einem Schaltzustand drei verschiedene Wandlerspannungen bereitzustellen und gemäß einem getakteten Betrieb die Ausgangsspannung (U_{A}) durch wechselweises Auswählen von mindestens zwei der drei Wandlerspannungen auszugeben.

## Beschreibung

### Technisches Gebiet

Die Erfindung betrifft allgemein das Gebiet von Gleichrichtern, insbesondere von Gleichrichtern mit getakteten Wandlerschaltungen.

### Stand der Technik

In einer Vielzahl von industriellen Anwendungen werden Versorgungssysteme für hohe Gleichströme benötigt, wie z.B. bei Elektrolyseprozessen sowie Schmelzprozessen in der Metallindustrie. Die dazu benötigten Ströme liegen im Bereich von wenigen 10 kA bis mehreren 100 kA. Solch hohe Stromstärken werden üblicherweise mit Hilfe von Gleichrichtern insbesondere aus mehrphasigen Wechselspannungen erzeugt.

Derartige Gleichrichter sind aus dem Stand der Technik bekannt. Gleichrichter, die eine Gleichspannung aus einer dreiphasigen Wechselspannung erzeugen, können einen Zwölf-Puls-Transformator zur Spannungsanpassung von einer Mittelspannung zu einer Niederspannung und zum Bereitstellen von mehreren Dreiphasensystemen mit jeweils drei Phasenspannungen aufweisen.

Die Ausgänge des Zwölf-Puls-Transformators sind mit Diodengleichrichterschaltungen zum Gleichrichten der Phasenspannungen verbunden. Jede der Diodengleichrichterschaltung umfasst eine Diodenbrücke für jede der Phasenspannungen. Die Diodenbrücken, die den einem Dreiphasensystem zugeordneten Phasenausgängen des Zwölf-Puls-Transformators zugeordnet sind, sind parallel geschaltet, um eine möglichst rippelarme Gleichspannung als Zwischenspannung bereitzustellen.

Zum Erzeugen einer variablen Ausgangs-Gleichspannung bzw. eines Ausgangsstroms aus den gleichgerichteten Spannungsausgängen der Diodengleichrichterscaltungen werden häufig Abwärtssteller, d.h. zweistufige Gleichspannungswandler, mit einem oder mehreren Leistungshalbleiterschaltern verwendet, die moduliert angesteuert werden, um die variable Ausgangs-Gleichspannung des Gleichrichters zu erzeugen. Derartige Leistungshalbleiterschalter werden häufig mit abschaltbaren Leistungshalbleiterschaltern, wie beispielsweise GTOs (Gate Turn-off Thyristor) oder IGBTs (Insulated Gate Bipolar Tnasistor) ausgeführt.

Bei den oben beschriebenen Gleichrichtern besteht ein grundsätzlicher Nachteil darin, dass durch das Herabtransformieren einer Mittelspannung zur Eingangsspannung für die Diodengleichrichterschaltungen, d.h. eine hohe Spannungsbelastung auf der Primärseite des Zwölf-Puls-Transformators, und eine hohe Strombelastung auf der Sekundärseite des Zwölf-Puls-Transformators besteht.

Bei der oben beschriebenen Gleichrichtertopologie mit zwei getrennten Stufen der Leistungswandlung, nämlich einer Diodengleichrichterschaltung und einem nachgeschalteten Gleichspannungswandler, besteht ein wesentlicher Nachteil darin, dass ein solcher Gleichrichter nur in einem bestimmten Eingangsspannungsbereich effizient arbeiten kann, so dass die hohe Strombelastung auf der Sekundärseite des Transformators weiterhin auftritt.

### Darstellung der Erfindung

Es ist daher Aufgabe der vorliegenden Erfindung, einen Gleichrichter zur Verfügung zu stellen, der die primärseitige Spannungsbelastung und die sekundärseitige Strombelastung eines Eingangstransformators reduziert und darüber hinaus den Rippel des Ausgangsstroms reduziert.

Diese Aufgabe wird durch den Gleichrichter gemäß Anspruch 1 gelöst. Weitere vorteilhafte Ausgestaltungen sind in den abhängigen Ansprüchen angegeben.

Gemäß einem Aspekt ist ein Gleichrichter vorgesehen. Der Gleichrichter umfasst eine Gleichrichterschaltung zum Bereitstellen einer gleichgerichteten Zwischenspannung aus mehreren Phasenspannungen eines Mehrphasensystems und eine Gleichspannungswandlerschaltung zum Generieren einer vorgegebenen Ausgangsspannung aus der Zwischenspannung. Die Gleichspannungswandlerschaltung ist ausgebildet, um abhängig von einem Schaltzustand drei verschiedene Wandlerspannungen bereitzustellen und gemäß einem getakteten Betrieb die Ausgangsspannung durch wechselweises Auswählen von mindestens zwei der drei Wandlerspannungen auszugeben.

Eine Idee der vorliegenden Erfindung besteht darin, bei einem Gleichrichter der oben beschriebenen Topologie die Hochstrombelastung auf der Sekundärseite des Eingangstransformators des Gleichrichters erheblich zu reduzieren und dadurch die Lebensdauer zu verlängern und die Zuverlässigkeit des Transformators zu erhöhen. Dies wird durch das Vorsehen der dreistufigen Gleichspannungswandlerschaltung erreicht. Weiterhin kann durch die dreistufige Gleichspannungswandlerschaltung ein im Vergleich zu einer Gleichrichtertopologie mit einer nur zweistufigen Gleichspannungswandlerschaltung größerer Bereich eines Spannungsabwärtswandlungsverhältnisses erreicht werden.

Weiterhin ermöglicht der obige Gleichrichter, insbesondere bei einem phasenversetzten Betrieb der dreistufigen Gleichspannungswandlerschaltungen, die Verwendung einer geringeren Drosselinduktivität am Ausgang der Gleichspannungswandlerschaltung.

Insbesondere kann die Gleichspannungswandlerschaltung zwei steuerbare Leistungshalbleiterschalter aufweisen, die jeweils zwischen einem Eingangsanschluss und einem Ausgangsanschluss der Gleichspannungswandlerschaltung geschaltet sind, wobei ein Zwischenkreispunkt als Knoten zwischen zwei in Reihe zwischen den Eingangsanschlüssen geschalteten Kapazitäten vorgesehen ist und wobei jeweils eine in Sperrrichtung gepolte Freilaufdiode zwischen dem Zwischenkreispunkt und den Ausgangsanschlüssen angeordnet sind.

Es kann eine Steuereinheit vorgesehen sein, um die Leistungshalbleiterschalter getaktet anzusteuern, so dass eine Ausgangsspannung durch das aufeinander folgende Auswählen von mindestens zwei der drei Wandlerspannungen erzeugt wird.

Weiterhin kann ein Transformator, insbesondere ein Zwölf-Puls-Transformator, zum Bereitstellen von mehreren Phasenspannungen in mindestens zwei Mehrphasensystemen vorgesehen sein, wobei für die Phasenspannungen jedes Mehrphasensystems mindestens ein Gleichrichterzweig mit einer oder mehreren Gleichrichterschaltungen und einer oder mehreren nachgeschalteten Gleichspannungswandlerschaltungen vorgesehen ist.

Gemäß einer Ausführungsform können die Ausgänge zumindest eines Teils der mehreren Gleichrichterschaltungen, die die gleichgerichtete Zwischenspannung bereitstellen, parallel miteinander verschaltet sein.

Ferner können die Ausgangsspannungen der Gleichspannungswandlerschaltungen der einzelnen Gleichrichterzweige parallel oder seriell verschaltet sein.

Weiterhin kann vorgesehen sein, dass an einen oder an mehrere der Ausgangsanschlüsse der Gleichspannungswandlerschaltungen der einzelnen Gleichrichterzweige jeweils eine Drosselinduktivität angeschlossen ist.

Gemäß einer weiteren Ausführungsform kann jeder Gleichrichterzweig mehrere zueinander parallel geschaltete Gleichspannungswandlerschaltungen aufweisen.

Mindestens eine der der Gleichspannungswandlerschaltungen kann eine Snubber-Schaltung (Entlastungsnetzwerk) aufweisen, um Hochfrequenz- oder Spannungsspitzen an den Leistungshalbleiterschaltern zu dämpfen. Mit dieser Maßnahme kann die Zuverlässigkeit und der maximal erreichbare Ausgangsstrom erhöht werden.

### Kurze Beschreibung der Zeichnungen

Bevorzugte Ausführungsformen der Erfindung werden nachfolgend anhand der beigefügten Zeichnungen näher erläutert. Es zeigen:
- Fig. 1: eine schematische Darstellung einer Schaltung eines Gleichrichters bei einer Parallelschaltung von zwei Gleichrichterzweigen,
- Fig. 2: eine schematische Darstellung einer Schaltung eines Gleichrichters bei einer Serienschaltung der zwei Gleichrichterzweige,
- Fig. 3: eine schematische Darstellung einer alternativen Ausgestaltung der Gleichspannungswandlerschaltung in den Ausführungsformen der Figuren 1 und 2,
- Fig. 4: eine schematische Darstellung einer weiteren Ausführungsform eines Gleichrichters mit einer Parallelschaltung mehrerer Gleichrichterzweige,
- Fig.5: eine schematische Darstellung eines Gleichrichters mit mehreren Gleichrichterschaltungen, die mit nur einer nachfolgenden dreistufigen Gleichspannungswandlerschaltung verbunden sind und
- Fig. 6a bis Fig. 6c: zeigen schematische Darstellungen jeweils eines Gleichrichterzweiges mit einer Snubber-Beschaltung.

### Wege zur Ausführung der Erfindung

In den nachfolgenden Figuren bezeichnen gleiche Bezugszeichen Elemente gleicher oder vergleichbarer Funktion.

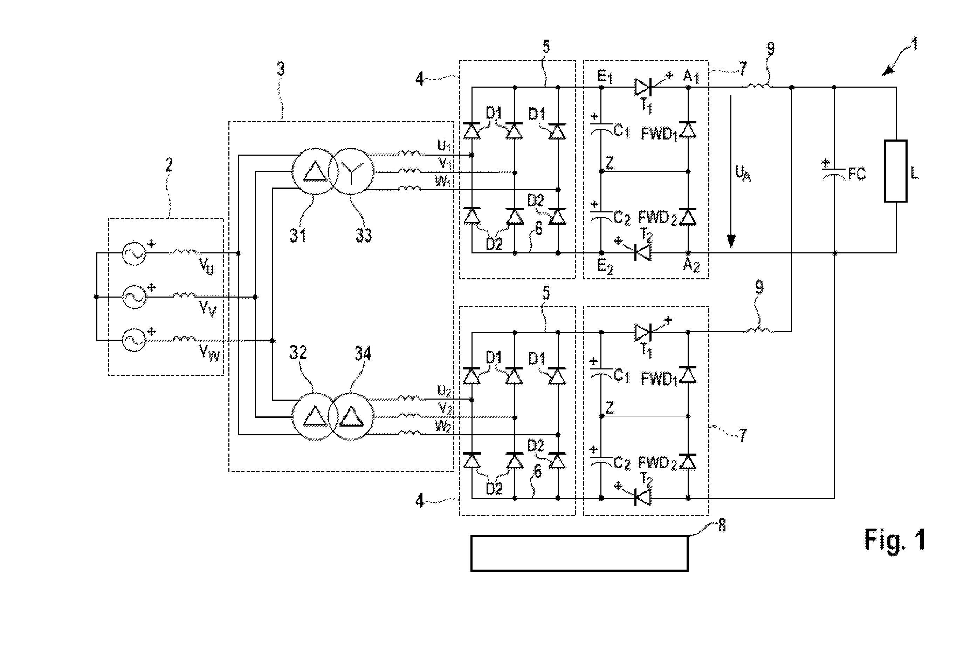

In Figur 1 ist eine schematische Darstellung eines Gleichrichters 1 gezeigt. Der Gleichrichter 1 wandelt eine dreiphasige Wechselspannung von einem Versorgungsblock 2, wie z.B. eine Mittelspannung aus einem Netzspannungsgenerator oder dergleichen, in eine Niedergleichspannung als Ausgangsspannung. Die Ausgangsspannung bewirkt einen Stromfluss über eine Last L am Ausgang des Gleichrichters 1. Als Eingangsspannungen können auch Wechselspannungen mit zwei oder mehr als drei Phasen vorgesehen sein.

Die drei Phasenspannungen Vᵤ, Vᵥ, V_{w} der von der Versorgungsquelle 2 bereitgestellten dreiphasigen Wechselspannung werden einem Zwölf-Puls-Transformator 3 zugeführt. Der Zwölf-Puls-Transformator 3 weist zwei voneinander getrennte Primärwicklungen 31, 32 in Dreiecks- oder Sternschaltung auf, die zueinander parallel geschaltet sind. Alternativ kann der Zwölf-Puls-Transformator 3 eine gemeinsame Primärwicklung in Dreiecks- oder Sternschaltung aufweisen. Sekundärseitig werden entsprechend herabtransformierte dreiphasige Wechselspannungen U₁, V₁, W₁, U₂, V₂, W₂ erzeugt. Dazu sind zwei galvanisch getrennte Sekundärwicklungen vorgesehen, eine in Dreiecksschaltung 34 und eine in Sternschaltung 33, die mit jeweils einer der mehreren Primärwicklungen 31, 32 transformatorisch gekoppelt sind. Der Zwölf-Puls-Transformator 3 stellt somit für jede Sekundärwicklung 33, 34 drei transformierte Phasenspannungen U₁, V₁, W₁, U₂, V₂, W₂ in zwei voneinander isolierten, d.h. galvanisch getrennten, Dreiphasensystemen zur Verfügung.

Die transformierten Phasenspannungen U₁, V₁, W₁, U₂, V₂, W₂ jedes Dreiphasensystems werden in einer dem jeweiligen Dreiphasensystem zugeordneten Diodengleichrichterschaltung 4 gleichgerichtet. Die Diodengleichrichterschaltung 4 entspricht einem herkömmlichen Brückengleichrichter, wobei jede der Phasenspannungen U₁, V₁, W₁, U₂, V₂, W₂ mit einer ersten Diode D1 mit einer ersten Zwischenpotentialleitung 5 und über eine zweite Diode D2 mit einer zweiten Zwischenpotentialleitung 6 verbunden ist. Im Detail ist die erste Zwischenpotentialleitung 5 mit einer Kathode der ersten Diode D1 und die zweite Zwischenpotentialleitung 6 mit einer Anode der zweiten Diode D2 verbunden. Die jeweilige Phasenspannung U₁, V₁, W₁, U₂, V₂, W₂ als Ausgang des Zwölf-Puls-Transformators 3 ist mit einer Anode der ersten Diode D1 und einer Kathode der zweiten Diode D2 verbunden.

Im gezeigten Ausführungsbeispiel der Figur 1 ist jede der voneinander isolierten Sekundärwicklungen des Zwölf-Puls-Transformators 3 mit einer separaten Diodengleichrichterschaltung 4 verbunden, so dass die Diodengleichrichterschaltungen 4 jeweils ein erstes Zwischenspannungspotenzial V1 auf der ersten Zwischenpotentialleitung 5 und ein zweites Zwischenspannungspotenzial V2 auf der zweiten Zwischenpotentialleitung 6 bereitstellen. Mit jeder der Diodengleichrichterschaltungen 4 ist eine Gleichspannungswandlerschaltung 7 verbunden, so dass gleichgerichtete Zwischenpotenziale V1, V2 als Ausgänge der jeweiligen Diodengleichrichterschaltungen 4 an Eingängen der jeweiligen Gleichspannungswandlerschaltung 7 anliegen.

Die Gleichspannungswandlerschaltungen 7 sind als dreistufige Steller ausgebildet und werden durch eine Steuereinheit 8 angesteuert, um gemäß einer Taktung eine vorgegebene Ausgangsgleichspannung U_{A} bereitzustellen. Je nach Anwendung ist die Ausgangsgleichspannung so gewählt, dass ein bestimmter Strom durch die Last L bereitgestellt wird.

Die dreistufige Gleichspannungswandlerschaltung 7 weist einen ersten Eingangsanschluss E₁ und einen zweiten Eingangsanschluss E₂ auf. Der erste Eingangsanschluss E₁ ist mit dem zweiten Eingangsanschluss E₂ über eine Serienschaltung zweier Kapazitäten C₁, C₂ verbunden, zwischen denen ein Zwischenkreispunkt Z bereitgestellt wird. Die Kapazitäten C₁, C₂ sind vorzugsweise gleich groß. Der erste Eingangsanschluss E₁ ist über einen ersten Leistungshalbleiterschalter T₁ mit einem ersten Ausgangsanschluss A₁ und der zweite Eingangsanschluss E₂ ist über einen zweiten Leistungshalbleiterschalter T₂ mit einem zweiten Ausgangsanschluss A₂ verbunden. Die Ausgangsanschlüsse A₁, A₂ stellen den Gleichspannungsausgang der Gleichspannungswandlerschaltung 7 dar. Die Leistungshalbleiterschalter T₁, T₂ sind vorzugsweise als Leistungstransistoren, insbesondere als GTOs (Gate Turn-off Thyristor) IGBTs (Insulated Gate Bipolar Tnasistor) oder IGCT (Integrated Gate-Commutated Transistor) ausgebildet.

Die Steueranschlüsse der Leistungshalbleiterschalter T₁, T₂ sind mit der Steuereinheit 8 verbunden, so dass diese entsprechend einer Vorgabe durch die Steuereinheit 8 ein- bzw. ausgeschaltet werden können. Zwischen dem ersten Ausgangsanschluss A₁ und dem Zwischenkreispunkt Z ist eine erste Freilaufdiode FWD₁ und zwischen dem zweiten Ausgangsanschluss A₂ und dem Zwischenkreispunkt Z ist eine zweite Freilaufdiode FWD₂ angeordnet. Im Detail ist eine Anode der ersten Freilaufdiode FWD₁ mit dem Zwischenkreispunkt Z und eine Kathode der ersten Freilaufdiode FWD₁ mit dem ersten Ausgangsanschluss A₁ verbunden. Analog sind eine Anode der zweiten Freilaufdiode FWD₂ mit dem zweiten Ausgangsanschluss A₂ und eine Kathode der zweiten Freilaufdiode FWD₂ mit dem Zwischenkreispunkt Z verbunden. Auf diese Weise bilden die Kapazitäten C₁, C₂, die Leistungshalbleiterschalter T₁, T₂ sowie die Freilaufdioden FWD₁, FWD₂ eine dreistufige Gleichspannungswandlerschaltung, die eine Ausgangsgleichspannung U_{A} durch aufeinander folgendes Ausgeben von Wandlerspannungen zwischen dem ersten Ausgangsanschluss A₁ und dem zweiten Ausgangsanschluss A₂ bereitstellen kann. Als Wandlerspannungen können eine Spannung von 0V, je nach Ansteuerung der Leistungshalbleiterschalter T₁, T₂, die durch die Diodengleichrichterschaltung 4 gleichgerichtete Zwischenspannung (Differenz der Zwischenpotenziale V1 und V2) und die halbe gleichgerichtete Zwischenspannung bereitgestellt werden. Dadurch ist eine verfeinerte Spannungsabstufung bei der Ansteuerung der Gleichspannungswandlerschaltung 7 möglich.

Einer der Ausgangsanschlüsse A₁, A₂ (im vorliegenden Beispiel der erste Ausgangsanschluss A₁) ist über eine Drosselinduktivität 9 mit der Ausgangslast L verbunden. Alternativ können auch beide Ausgangsanschlüsse A₁, A₂ über eine Drosselinduktivität 9 mit der Ausgangslast L verbunden sein. Weiterhin ist eine Filterkapazität FC vorgesehen, die über die Drosselinduktivität 9 mit dem ersten Ausgangsanschluss A₁ und mit dem zweiten Ausgangsanschluss A₂ direkt verbunden ist. Die Filterkapazität FC und die Drosselinduktivität 7 dienen dazu, die Stromrippel, d.h. die Stromschwankungen durch die Last L, zu reduzieren.

Die Ansteuerung erfolgt nach bekannten Verfahren, beispielsweise durch wechselweises Anlegen einer ersten Wandlerspannung über die Ausgangsanschlüsse A₁, A₂ für eine erste Zeitdauer und anschließendes Anlegen einer zweiten Wandlerspannung über die Ausgangsanschlüsse A₁, A₂ für eine zweite Zeitdauer. Das Verhältnis der ersten und zweiten Zeitdauer, während der die erste bzw. die zweite Wandlerspannung angelegt sind, und die nacheinander ausgegebenen Wandlerspannungen bestimmen die resultierende Ausgangsspannung U_{A}. Die nacheinander durch die Gleichspannungswandlerschaltung 7 ausgegebenen Wandlerspannungen werden durch nachfolgende Induktivitäten, z.B. die Drosselinduktivität, und/oder Kapazitäten, z.B. die Filterkapazität FC, geglättet, um die Ausgangsgleichspannung U_{A} bereitzustellen.

Die Wandlerspannungen werden in der Regel durch Schalten eines oder beider Leistungshalbleiterschalter T₁, T₂ gesteuert von der Steuereinheit 8 erzeugt. Ist nur einer der beiden Leistungshalbleiterschalter T₁, T₂ geschlossen und der jeweils andere geöffnet, so liegt die halbe Zwischenspannung bzw. die Spannung des Zwischenkreispunktes zwischen den Ausgangsanschlüssen A₁, A₂ an. Sind beide Leistungshalbleiterschalter T₁, T₂ geschlossen, so liegt die volle Zwischenspannung zwischen den Ausgangsanschlüssen A₁, A₂ an, und wenn beide Leistungshalbleiterschalter T₁, T₂ geöffnet sind, liegt eine Wandlerspannung von 0V zwischen den Ausgangsanschlüssen A₁, A₂ an. Im unbelasteten Zustand liegt der Zwischenkreispunkt Z auf dem Potenzial der halben Zwischenspannung (Kondensatoren C₁, C₂ mit gleicher Kapazität vorausgesetzt). Um das Potenzial des Zwischenkreispunktes Z möglichst konstant zu halten, ist es vorteilhaft, dass, wenn die halbe Zwischenspannung als die Wandlerspannung ausgegeben werden soll, dies durch die alternierende Wahl des zu schließenden Leistungshalbleiterschalters T₁, T₂ durchgeführt wird. Auf diese Weise werden die Kondensatoren C₁, C₂ im entsprechenden Wechsel ge- und entladen, so dass sich ein Potenzial am Zwischenkreispunkt Z von etwa der halben Zwischenspannung einstellt.

Ein Vorteil der verfeinerten Spannungsabstufung der Gleichspannungswandlerschaltungen 7 gegenüber einem zweistufigen Gleichspannungswandler besteht darin, dass die Drosselinduktivität 9 bei Vorgabe einer Schaltfrequenz für die Leistungshalbleiterschalter T₁, T₂ und des maximal zulässigen Stromrippels kleiner dimensioniert und dadurch weniger aufwändig ausgeführt werden kann.

Die Steuereinheit 8 ist mit den Gleichspannungswandlerschaltungen 7 verbunden und betreibt diese vorzugsweise zueinander phasenversetzt, d.h. die Leistungshalbleiterschalter T₁, T₂ werden so geschaltet, dass ein gleichzeitiges Schalten möglichst vermieden wird. Der Phasenversatz zwischen den Ansteuerungen der Leistungshalbleiterschalter T₁, T₂ beider Gleichspannungswandlerschaltungen 7 kann variabel sein, wodurch die Höhe des Stromrippels des Gesamtstroms über der Last L am Ausgang erheblich reduziert werden kann. Alllgemein kann der Phasenversatz zwischen den Ansteuerungen der Gleichspannungswandlerschaltungen 7 hinsichtlich des Stromrippels optimiert werden.

Ein verringerter Stromrippels durch die Last L kann weiterhin die Größe der Ausgangsfilterkapazität FC reduzieren, wodurch sich der Aufwand und Platzbedarf beim Aufbau der Schaltung erheblich reduziert. Weiterhin führt ein reduzierter Stromrippels über der Last L zu einer verringerten elektromagnetischen Interferenz.

Die Verwendung der dreistufigen Gleichspannungswandlerschaltungen 7 ermöglicht es z.B. im Unterschied zu zweistufigen Gleichspannungswandlerschaltungen, Ausgangsgleichspannungen U_{A} in einem großen Bereich zu erzeugen.

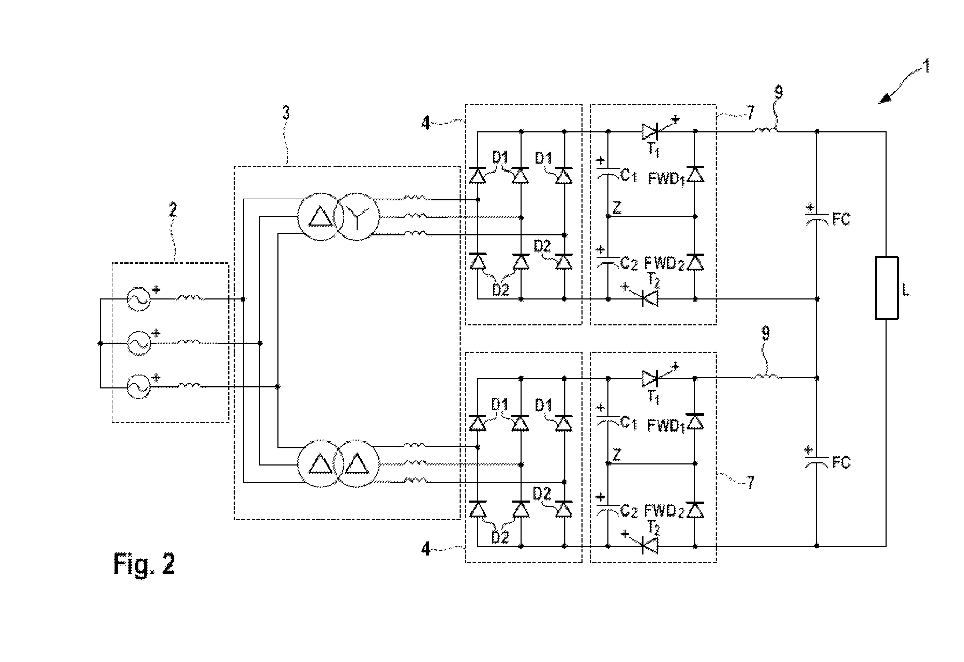

Während bei dem Gleichrichter der Figur 1 die Gleichspannungsausgänge A₁, A₂ der Gleichspannungswandlerschaltungen 7 im Wesentlichen parallel geschaltet sind, so dass sich die Ausgangsströme für jeden der durch eine der Diodengleichrichterschaltungen 5 und die nachfolgende Gleichspannungswandlerschaltung 7 gebildeten Gleichrichterzweig für die Last L addieren, sind die Ausgänge der Gleichrichterzweige beim Gleichrichter der Figur 2 zueinander in Reihe geschaltet, so dass sich deren einzelne Ausgangsgleichspannungen U_{A} an den Gleichspannungsausgängen addieren, so dass eine höhere Gesamtausgangsspannung an der Last L bereitgestellt werden kann. Bei einer Serienschaltung der Gleichrichterzweige kann durch die Verwendung der dreistufigen Gleichspannungswandlerschaltungen 7 ein Spannungsrippels der gesamten Ausgangsspannung U_{A} reduziert werden.

Anstelle von zwei Gleichrichterzweigen der Ausführungsformen der Fig.1 und Fig. 2 können auch mehr als zwei Gleichrichterzweige parallel oder seriell verschaltet werden. Analog können auch mehrere Gleichrichterzweige an einem Dreiphasensystem parallel verschaltet werden.

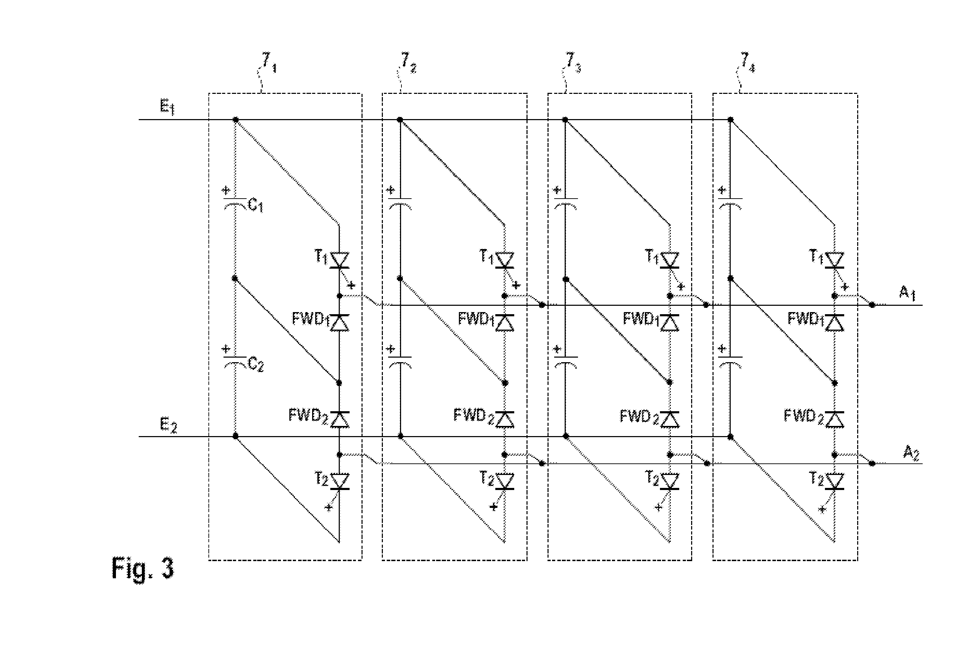

Bei Verwendung von IGCT bzw. IGBT als Leistungshalbleiterschalter T₁, T₂ muss deren Stromtragfähigkeit beachtet werden. Um das Bereitstellen höherer Stromstärken zu ermöglichen, ist gemäß dem Beispiel der Figur 3 vorgesehen, die Gleichspannungswandlerschaltung 7 durch mehrere gleichartige, parallel geschaltete Gleichspannungswandlerschaltungen 7₁, 7₂, 7₃, 7₄ auszubilden bzw. zu ersetzen, so dass dessen erste Eingangsanschlüsse E₁, dessen zweite Eingangsanschlüsse E₂, dessen erste Ausgangsanschlüsse A₁ und dessen zweite Ausgangsanschlüsse A₂ jeweils miteinander verbunden sind. In der Gleichspannungswandlerschaltung der Figur 3 sind vier gleichartige Gleichspannungswandlerschaltungen zueinander parallel geschaltet, die Anzahl der parallel zu schaltenden Gleichspannungswandlerschaltungen 7₁, 7₂, 7₃, 7₄ ist jedoch beliebig und kann abhängig von der Dimensionierung der Leistungshalbleiterschalter T₁, T₂ an die benötigte Ausgangsstromstärke angepasst werden. Dadurch kann die einzelne Gleichspannungswandlerschaltung 7₁, 7₂, 7₃, 7₄ zum Bereitstellen eines Teilstroms mit einer geeigneten Stromstärke betrieben werden.

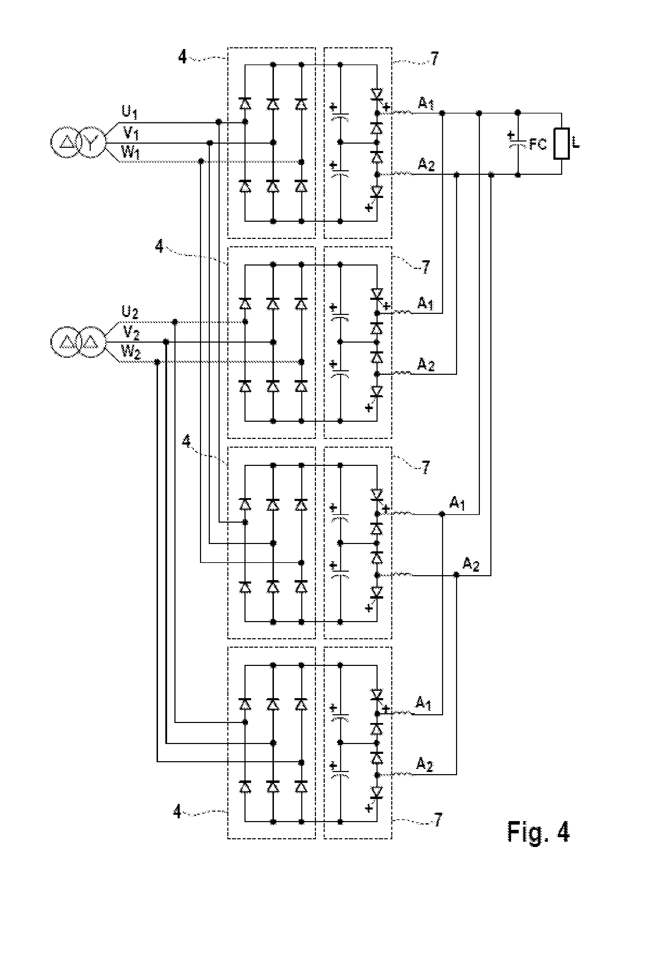

Figur 4 zeigt eine weitere Ausführungsform eines Gleichrichters, bei dem jeweils zwei Gleichrichterzweige mit jeweils einer Diodengleichrichterschaltung 4 und einer nachgeschalteten dreistufigen Gleichspannungswandlerschaltung 7 an die drei Phasenspannungen U₁, V₁, W₁ eines der Dreiphasensysteme und entsprechend jeweils zwei Gleichrichterzweige mit jeweils einer Diodengleichrichterschaltung 4 und einer nachgeschalteten dreistufigen Gleichspannungswandlerschaltung 7 an die drei Phasenspannungen U₂, V₂, W₂ eines weiteren der Dreiphasensysteme angeschlossen sind.

Die Ausgänge A₁, A₂ der (vier) so parallel geschalteten Gleichrichterzweige sind zueinander parallel geschaltet, so dass sich deren Ausgangsströme addieren. Jeder der Ausgänge der Gleichspannungswandlerschaltung 7 kann mit einer Drosselinduktivität 9 versehen sein, um zu hohe Stromgradienten zu vermeiden, die die Leistungshalbleiterschalter T₁, T₂ - je nach Ausführung - schädigen können.

Im Unterschied zur Ausführungsform der Figur 3 werden bei der Ausführungsform der Figur 4 nicht nur die dreistufigen Gleichspannungswandlerschaltungen 7, sondern auch die zugehörigen Diodengleichrichterschaltungen 4 mehrfach vorgesehen.

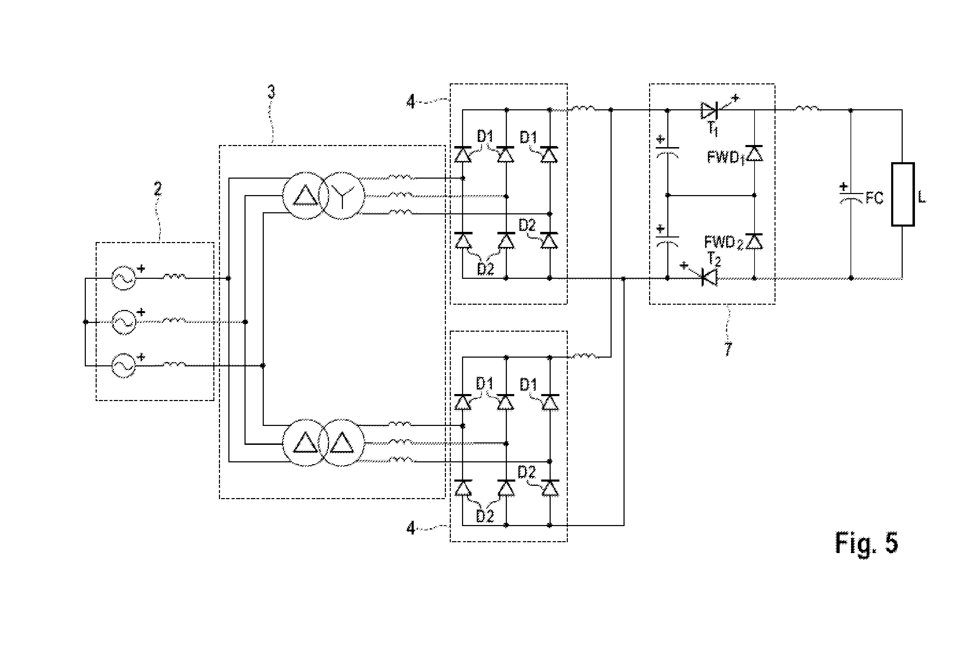

Gemäß einer weiteren Ausführungsform, die in Figur 5 dargestellt ist, werden die für jedes Dreiphasensystem der Phasenausgänge des Zwölf-Puls-Transformators 3 vorgesehenen Diodengleichrichterschaltungen 4 so miteinander verschaltet, dass diese ausgangsseitig mit ihren Zwischenpotenzialleitungen 5, 6 parallel geschaltet sind, d.h. dass sich die Ausgangsströme der Diodengleichrichterschaltungen 4 addieren. Diese Parallelschaltung der Diodengleichrichterschaltungen 4 ist dann mit einer einzigen nachgeschalteten dreistufigen Gleichspannungswandlerschaltung 7 verbunden. Alternativ kann auch eine Anordnung gemäß Figur 3, d.h. mehrere parallel geschaltete Gleichspannungswandlerschaltungen vorgesehen werden. Der Aufbau des Gleichrichters nach Figur 5 führt ebenfalls zu einem reduzierten Stromrippel, insbesondere aufgrund des Einsatzes der dreistufigen Gleichspannungswandlerschaltung 7.

Insgesamt wird bei den zuvor beschriebenen Ausführungsformen die Strombelastung auf den Zwölf-Puls-Transformator reduziert, wodurch die Zuverlässigkeit des Systems deutlich erhöht wird. Auch ermöglicht der Gleichrichter eine schnellere Steuerdynamik und einen geringeren Ausgangsrippel, was zu einer höheren Prozesseffizienz und einer besseren Systemleistung führt.

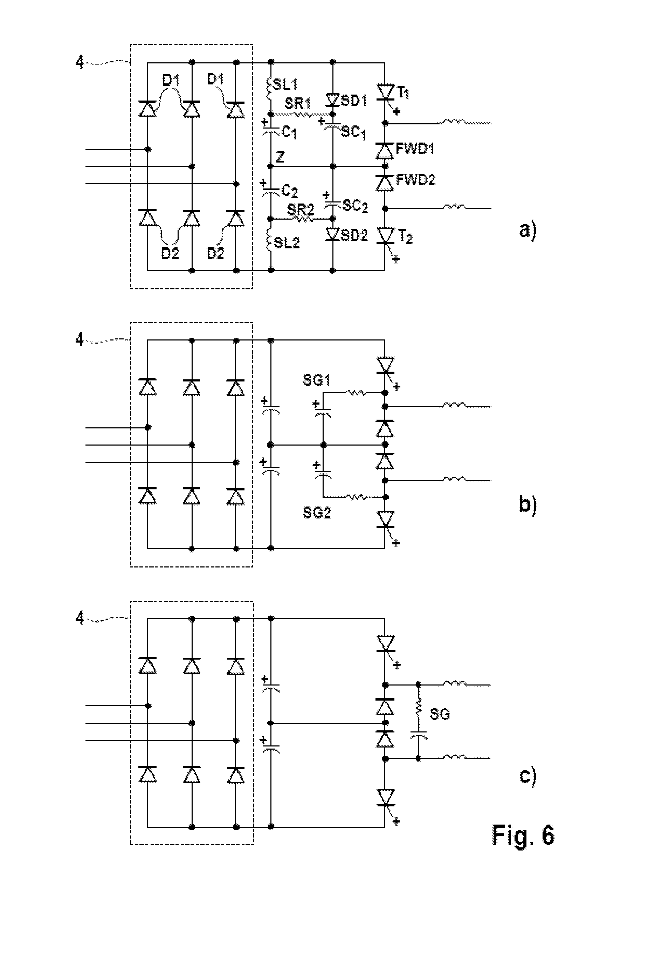

In den Figuren 6a bis 6c sind verschiedene Ausgestaltungen eines Gleichrichterzweigs mit Snubber-Schaltungen (Entlastungsnetzwerke) dargestellt. Eine Snubber-Schaltung dient dazu, eine störende Hochfrequenz- oder Spannungsspitze zu neutralisieren, die beim Schalten einer induktiven Last auftreten kann, wenn der Stromfluss abrupt unterbrochen wird. Eine Snubber-Schaltung wird zum Erreichen einer besseren elektromagnetischen Verträglichkeit und zur Begrenzung der Strom- bzw. der Spannungs-Anstiegsgeschwindigkeit an Halbleiterschaltern, wie z.B. Thyristoren, IGBTs, IGCTs und dergleichen, eingesetzt.

In Figur 6a umfasst die Snubber-Schaltung eine erste und zweite Snubber-Induktivität SL₁, SL₂, einen ersten und zweiten Snubber-Widerstand SR₁, SR₂, eine erste und eine zweite Snubber-Diode SD₁, SD₂ sowie eine erste und eine zweite Snubber-Kapazität SC₁, SC₂. Im Detail ist die erste Snubber-Induktivität SL₁ mit einem ersten Eingangsanschluss E₁, d.h. mit dem ersten Zwsichenpotenzial V₁, verbunden. Ein zweiter Anschluss der Snubber-Induktivität SL₁ ist mit einem ersten Anschluss der ersten Kapazität C₁ und einem ersten Anschluss des ersten Snubber-Widerstands SR₁ verbunden. Der erste Eingangsanschluss E₁ ist weiterhin mit einer Anode der ersten Snubber-Diode SD₁ verbunden, deren Kathode mit dem zweiten Anschluss des ersten Snubber-Widerstands SR₁ und einem ersten Anschluss des ersten Snubber-Kondensators SC₁ verbunden ist. Ein zweiter Anschluss des ersten Snubber-Kondensators SC₁ ist ebenso wie der zweite Anschluss der ersten Kapazität C₁ mit dem Zwischenkreispunkt Z verbunden.

Ein erster Anschluss der zweiten Kapazität C₂ und ein erster Anschluss der zweiten Snubber-Kapazität SC₂ sind mit dem Zwischenkreispunkt Z verbunden. Ein zweiter Anschluss der zweiten Kapazität C₂ ist mit einem ersten Anschluss der zweiten Snubber-Induktivität SL₂ und einem ersten Anschluss des zweiten Snubber-Widerstands SR₂ verbunden. Ein zweiter Anschluss der zweiten Snubber-Kapazität SC₂ und ein zweiter Anschluss des zweiten Snubber-Widerstands SR₂ sind miteinander und mit einem ersten Anschluss der zweiten Snubber-Diode SD₂ verbunden. Ein zweiter Anschluss der zweiten Snubber-Induktivität SL₂ und ein zweiter Anschluss der zweiten Snubber-Diode SD₂ (Kathode) sind mit dem zweiten Eingangsanschluss E₂, d.h. dem zweiten Zwischenpotenzial V₂ verbunden.

In der Ausführungsform der Figur 6b sind zwei Snubber-Glieder SG₁, SG₂, die jeweils eine Reihenschaltung einer Snubber-Kapazität SC und eines Snubber-Widerstands SR umfassen, zwischen jedem der Ausgangsanschlüsse A₁, A₂ der Gleichspannungswandlerschaltung 7 und dem Zwischenkreispunkt Z geschaltet.

Alternativ ist ein solches Snubber-Glied SG in der Ausführungsform der Figur 6c zwischen die beiden Ausgangsanschlüsse A₁, A₂ angeschlossen.

### Bezugszeichenliste

- 1: Gleichrichter
- 2: Versorgungsquelle
- 3: Zwölf-Puls-Transformator
- 4: Diodengleichrichterschaltung
- 5: Erste Zwischenpotenzialleitung
- 6: Zweite Zwischenpotenzialleitung
- 7, 7₁, 7₂, 7₃, 7₄: Gleichspannungswandlerschaltung
- 8: Steuereinheit
- 9: Drosselinduktivität
- L: Last
- FC: Filterkapazität
- D₁, D₂: Erste, zweite Diode
- E₁, E₂: Erster, zweiter Eingangsanschluss
- T₁, T₂: Erster, zweiter Leistungshalbleiterschalter
- A₁, A₂: Erster, zweiter Ausgangsanschluss
- C₁, C₂: Erste, zweite Kapazität
- Z: Zwischenkreispunkt
- FWD₁, FWD₂: Erste, zweite Freilaufdiode
- SL₁, SL₂: Erste, zweite Snubber-Induktivität
- SR₁, SR₂: Erster, zweiter Snubber-Widerstand
- SD₁, SD₂: Erste, zweite Snubber-Diode
- SC₁, SC₂: Erste, zweite Snubber-Kapazität
- SG: Snubber-Glied

## Patentansprüche

1. Gleichrichter (1) umfassend:
- eine Gleichrichterschaltung (4) zum Bereitstellen einer gleichgerichteten Zwischenspannung aus mehreren Phasenspannungen eines Mehrphasensystems;
- eine Gleichspannungswandlerschaltung (7) zum Generieren einer vorgegebenen Ausgangsspannung aus der Zwischenspannung,
**dadurch gekennzeichnet, dass**
die Gleichspannungswandlerschaltung (7) ausgebildet ist, um abhängig von einem Schaltzustand drei verschiedene Wandlerspannungen bereitzustellen und gemäß einem getakteten Betrieb die Ausgangsspannung durch aufeinander folgendes Auswählen von mindestens zwei der drei Wandlerspannungen auszugeben.

2. Gleichrichter (1) nach Anspruch 1, wobei die Gleichspannungswandlerschaltung (7) zwei steuerbare Leistungshalbleiterschalter (T₁, T₂) aufweist, die jeweils zwischen einem Eingangsanschluss (E₁, E₂) und einem Ausgangsanschluss (A₁, A₂) der Gleichspannungswandlerschaltung (7) geschaltet sind, wobei ein Zwischenkreispunkt (Z) als Knoten zwischen zwei in Reihe zwischen den Eingangsanschlüssen (E₁, E₂) geschalteten Kapazitäten (C₁, C₂) vorgesehen ist, und wobei jeweils eine in Sperrrichtung gepolte Freilaufdiode (FWD₁, FWD₂) zwischen dem Zwischenkreispunkt (Z) und den Ausgangsanschlüssen (A₁, A₂) angeordnet ist.

3. Gleichrichter (1) nach Anspruch 2, wobei eine Steuereinheit (8) vorgesehen ist, um die Leistungshalbleiterschalter (T₁, T₂) getaktet anzusteuern, so dass eine Ausgangsspannung (U_{A}) durch das aufeinander folgende Auswählen von mindestens zwei der drei Wandlerspannungen erzeugt wird.

4. Gleichrichter (1) nach einem der Ansprüche 1 bis 3, wobei ein Transformator (3), insbesondere ein Zwölf-Puls-Transformator, zum Bereitstellen von mehreren Phasenspannungen (U₁, V₁, W₁, U₁, U₂, W₂) in mindestens zwei Mehrphasensystemen vorgesehen ist, wobei für die Phasenspannungen (U₁, V₁, W₁, U₁, U₂, W₂) jedes Mehrphasensystems mindestens ein Gleichrichterzweig mit einer oder mehreren Gleichrichterschaltungen (4) und einer oder mehreren nachgeschalteten Gleichspannungswandlerschaltungen (7) vorgesehen ist.

5. Gleichrichter (1) nach Anspruch 4, wobei die Ausgänge zumindest eines Teils der mehreren Gleichrichterschaltungen (4), die die gleichgerichtete Zwischenspannung bereitstellen, parallel miteinander verschaltet sind.

6. Gleichrichter (1) nach Anspruch 4 oder 5, wobei die Ausgangsspannungen der Gleichspannungswandlerschaltungen (7) der einzelnen Gleichrichterzweige parallel oder seriell verschaltet sind.

7. Gleichrichter (1) nach einem der Ansprüche 4 bis 6, wobei an einen oder an mehrere der Ausgangsanschlüsse der Gleichspannungswandlerschaltungen (7) der einzelnen Gleichrichterzweige jeweils eine Drosselinduktivität (9) angeschlossen ist.

8. Gleichrichter (1) nach einem der Ansprüche 4 bis 7, wobei jeder Gleichrichterzweig mehrere zueinander parallel geschaltete Gleichspannungswandlerschaltungen (7) aufweist.

9. Gleichrichter (1) nach einem der Ansprüche 2 bis 8, wobei mindestens eine der Gleichspannungswandlerschaltungen (7) eine Snubberschaltung aufweist, um Hochfrequenz- oder Spannungsspitzen über den Leistungshalbleiterschaltern (T₁, T₂) zu dämpfen.
